# EUROPEAN PATENT APPLICATION

(11) **EP 3 358 549 A1**
(43) Date of publication of application: **08.08.2018**
(21) Application number: 16850747.3
(22) Date of filing: 13.06.2016
(51) Int. Cl.: G08G 1/16

(54) **DRIVING SUPPORT DEVICE**

(30) Priority: 30.09.2015 JP 2015194781; 30.09.2015 JP 2015194782
(71) Applicant: Aisin Seiki Kabushiki Kaisha, Kariya-shi, Aichi 448-8650 (JP)
(72) Inventor: NOGIMORI, Wataru, Kariya-shi Aichi 448-8650 (JP)
(74) Representative: Cabinet Beau de Loménie
(86) International application number: PCT/JP2016/067560
(87) International publication number: WO 2017/056570

(57) **Abstract**

A drive assist apparatus includes a recognition processing portion recognizing circumstances of surroundings of a vehicle, a drive assistance processing portion performing a drive assist control in accordance with the circumstances of the surroundings of the vehicle which are recognized by the recognition processing portion, a display processing portion displaying a change of the circumstances of the surroundings of the vehicle on a display portion in a case where the circumstances of the surroundings of the vehicle change, a detection processing portion detecting information related to a line of sight of a driver of the vehicle, and in a case where the circumstances of the surroundings of the vehicle change, an output processing portion outputting a first notice notifying the driver that the circumstances of the surroundings of the vehicle have changed by using another notifying portion which is separate from the display portion, and the output processing portion outputting a second notice notifying again the driver that the circumstances of the surroundings of the vehicle have changed by using the notifying portion after the first notice is outputted if it is not detected that the line of sight of the driver is directed to the display portion on the basis of a detection result by the detection processing portion.

## Description

### TECHNICAL FIELD

The embodiments of the present invention relate to a drive assist apparatus.

### BACKGROUND ART

A technique is conventionally known which performs a drive assist control in accordance with circumstances of surroundings of a vehicle which are recognized by a sensor and/or a camera, for example. In such a technique, in a case where the circumstances of the surroundings of the vehicle change, the change of the circumstances is visually displayed on a display portion, for example.

### DOCUMENT OF PRIOR ART

### PATENT DOCUMENT

Patent document 1: JP2003-34205A

### OVERVIEW OF INVENTION

### PROBLEM TO BE SOLVED BY INVENTION

In the above-described technique, it is desired that a driver is made to visually recognize the circumstances of the surroundings of the vehicle more reliably in a case where the circumstances of the surroundings of the vehicle change.

### MEANS FOR SOLVING PROBLEM

A drive assist apparatus according to an embodiment includes a recognition processing portion recognizing circumstances of surroundings of a vehicle, a drive assistance processing portion performing a drive assist control in accordance with the circumstances of the surroundings of the vehicle which are recognized by the recognition processing portion, a display processing portion displaying a change of the circumstances of the surroundings of the vehicle on a display portion in a case where the circumstances of the surroundings of the vehicle change, a detection processing portion detecting information related to a line of sight of a driver of the vehicle. The drive assist apparatus includes an output processing portion wherein, in a case where the circumstances of the surroundings of the vehicle change, the output processing portion outputs a first notice notifying the driver that the circumstances of the surroundings of the vehicle have changed by using another notifying portion which is separate from the display portion, and the output processing portion outputting a second notice notifying again the driver that the circumstances of the surroundings of the vehicle have changed by using the notifying portion after the first notice is outputted if it is not detected that the line of sight of the driver is directed to the display portion on the basis of a detection result by the detection processing portion. Due to the above-described configuration, with the use of the first notice and the second notice, the driver can be made to visually recognize the change of the circumstances of the surroundings of the vehicle more reliably.

At the above-described drive assist apparatus, the output processing portion outputs the second notice repeatedly until it is detected that the line of sight of the driver is directed to the display portion. Due to the above-described configuration, the driver can be made to visually recognize the change of the circumstances of the surroundings of the vehicle even more reliably.

At the above-described drive assist apparatus, the output processing portion outputs the second notice in an output manner which is different from an output manner of the first notice, and in a case where the output processing portion outputs the second notice twice or more, the output processing portion outputs the second notice which is outputted second time or after in an output manner that is different from an output manner of the second notice which was outputted in the past. Due to the above-described configuration, for example, by enhancing an attention-attracting-effect of the notice which is outputted later, the driver can be made to visually recognize the change of the circumstances of the surroundings of the vehicle more reliably.

At the above-described drive assist apparatus, in a case where the output processing portion outputs the second notice twice or more, after the second notice is outputted for the first time, the output processing portion outputs the second notice repeatedly until the second notice is outputted for a predetermined number of times. According to the above-described configuration, it can be restricted that the driver feels troublesome or uncomfortable excessively due to the repeated outputs of the second notice.

At the above-described drive assist apparatus, in a case where the output processing portion outputs the second notice twice or more, after the second notice is outputted for the first time, the output processing portion outputs the second notice repeatedly until it is detected by the detection processing portion that the line of sight of the driver is directed to the display portion and it is detected by the detection processing portion that the driver performs a predetermined active action of an eye. Due to the above-described configuration, it can be determined more reliably whether or not the driver has looked at the display portion actively.

At the above-described drive assist apparatus, the notifying portion includes a sound output portion configured to output sound, and the output processing portion outputs the first notice and the second notice with the sound, by using the sound output portion. Due to the above-described configuration, the driver can be notified more easily that the circumstances of the surroundings of the vehicle have changed with the use of the sound.

A drive assist apparatus according to an embodiment includes a recognition processing portion recognizing circumstances of surroundings of a vehicle, a drive assistance processing portion performing a drive assist control in accordance with the circumstances of the surroundings of the vehicle which are recognized by the recognition processing portion, a detection processing portion detecting information related to a line of sight of a driver of the vehicle, and an output processing portion. In a case where the circumstances of the surroundings of the vehicle change, the output processing portion outputs a first notice notifying the driver that the circumstances of the surroundings of the vehicle have changed if it is detected that a driving posture including a direction of the line of sight of the driver satisfies a predetermined condition on the basis of a detection result by the detection processing portion, and the output processing portion outputs a first warning which warns the driver that the driving posture does not satisfy the predetermined condition if it is detected that the driving posture does not satisfy the predetermined condition on the basis of the detection result by the detection processing portion. Due to the above-described configuration, in a case where the circumstances of the surroundings of the vehicle have changed, the driver can be prompted or encouraged to correct if needed his or her driving posture with the use of the first notice and the first warning, and consequently the driver can be made to recognize the change of the circumstances of the surroundings of the vehicle more reliably.

At the above-described drive assist apparatus, that the driving posture satisfies the predetermined condition corresponds to that the direction of the line of sight of the driver is detected normally and the direction of the line of sight of the driver is directed to within a range of a predetermined angle relative to a travelling direction of the vehicle. Due to the above-described configuration, by using the two conditions, it can be easily determined whether or not the driver is performing a one-handed driving operation and/or an inattentive driving, for example.

At the above-described drive assist apparatus, if a state in which it is detected that the driving posture does not satisfy the predetermined condition continues even after the output processing portion outputted the first warning, the output processing portion repeatedly outputs a second warning which warns again the driver that the driving posture does not satisfy the predetermined condition until it is detected that the driving posture satisfies the predetermined condition. Due to the above-described configuration, with the use of the second warning, the driver can be more strongly prompted to correct the driving posture.

The above-described drive assist apparatus further includes a display processing portion displaying a change of the circumstances of the surroundings of the vehicle on a display portion in a case where the circumstances of the surroundings of the vehicle change, after the first notice is outputted, if it is not detected that the line of sight of the driver is directed to the display portion by the detection processing portion, the output processing portion repeatedly outputting a second notice which notifies again the driver that the circumstances of the surroundings of the vehicle have changed until it is detected by the detection processing portion that the line of sight of the drive is directed to the display portion. Due to the above-described configuration, with the use of the second notice, the driver can be made to visually recognize the change of the circumstances of the surroundings of the vehicle more reliably.

At the above-described drive assist apparatus, the output processing portion outputs the first notice or the first warning with sound, by using a sound output portion configured to output the sound. Due to the above-described configuration, with use of the sound, the driver can be prompted or encouraged to correct the driving posture as needed and to visually recognize the change of the circumstances of the surroundings of the vehicle, more easily.

### BRIEF DESCRIPTION OF DRAWINGS

[Fig. 1] Fig. 1 is an exemplary perspective view illustrating a state in which part of a vehicle cabin of a vehicle is viewed in a transparent manner according to a first embodiment.
[Fig. 2] Fig. 2 is an exemplary view illustrating an instrument panel according to the first embodiment.
[Fig. 3] Fig. 3 is an exemplary view illustrating an example of an image displayed on a display apparatus of the instrument panel according to the first embodiment.
[Fig. 4] Fig. 4 is an exemplary view illustrating another example, which is different from Fig. 3, of an image displayed on the display apparatus of the instrumental panel according to the first embodiment.
[Fig. 5] Fig. 5 is an exemplary view illustrating an arrangement of an image-taking apparatus according to the first embodiment.
[Fig. 6] Fig. 6 is an exemplary block diagram illustrating a configuration of a drive assist system to be mounted on the vehicle according to the first embodiment.
[Fig. 7] Fig. 7 is an exemplary block diagram illustrating a functional configuration of ECU according to the first embodiment.
[Fig. 8] Fig. 8 is an exemplary flowchart illustrating processing performed by the ECU according to the first embodiment.
[Fig. 9] Fig. 9 is an exemplary flowchart illustrating processing performed by the ECU according to a second embodiment.
[Fig. 10] Fig. 10 is an exemplary flowchart illustrating processing performed by the ECU according to a third embodiment.
[Fig. 11] Fig. 11 is an exemplary view for explaining a one-handed driving operation according to a fourth embodiment.
[Fig. 12] Fig. 12 is an exemplary view for explaining an inattentive driving according to the fourth embodiment.
[Fig. 13] Fig. 13 is an exemplary flowchart illustrating processing performed by the ECU according to the fourth embodiment.
[Fig. 14] Fig. 14 is an exemplary flowchart illustrating processing performed by the ECU according to a fifth embodiment.
[Fig. 15] Fig. 15 is an exemplary view illustrating an example of an image displayed on a display apparatus of a navigation system in a case where recognized circumstance of surroundings of a vehicle change according to a variation.
[Fig. 16] Fig. 16 is an exemplary view illustrating an example of an image displayed on a display apparatus of a navigation system before circumstances of surroundings of a vehicle change according to a variation.
[Fig. 17] Fig. 17 is an exemplary view illustrating an image switched from the image of Fig. 16 and displayed, after the circumstances of the surroundings of the vehicle changed according to the variation.
[Fig. 18] Fig. 18 is an exemplary view illustrating another example different from the Fig. 16, which illustrates an image displayed on the display apparatus of the navigation system before the circumstances of the surroundings of the vehicle change according to a variation.
[Fig. 19] Fig. 19 is an exemplary view illustrating an image switched from the image of Fig. 18 and displayed, after the circumstances of the surroundings of the vehicle changed according to the variation.
[Fig. 20] Fig. 20 is an exemplary view illustrating another example different from the Figs. 16 and 18, which illustrates an image displayed on the display apparatus of the navigation system before the circumstances of the surroundings of the vehicle changes according to the variation.
[Fig. 21] Fig. 21 is an exemplary view illustrating an image switched from the image of Fig. 20 and displayed, after the circumstances of the surroundings of the vehicle changed according to the variation.
[Fig. 22] Fig. 22 is an exemplary view illustrating another example different from the Figs. 16, 18 and 20, which illustrates an image displayed on the display apparatus of the navigation system before the circumstances of the surroundings of the vehicle change according to the variation.
[Fig. 23] Fig. 23 is an exemplary view illustrating an image switched from the image of Fig. 22 and displayed, after the circumstances of the surroundings of the vehicle changed according to the variation.

### MODE FOR CARRYING OUT THE INVENTION

Embodiments will be described hereunder with reference to the drawings.

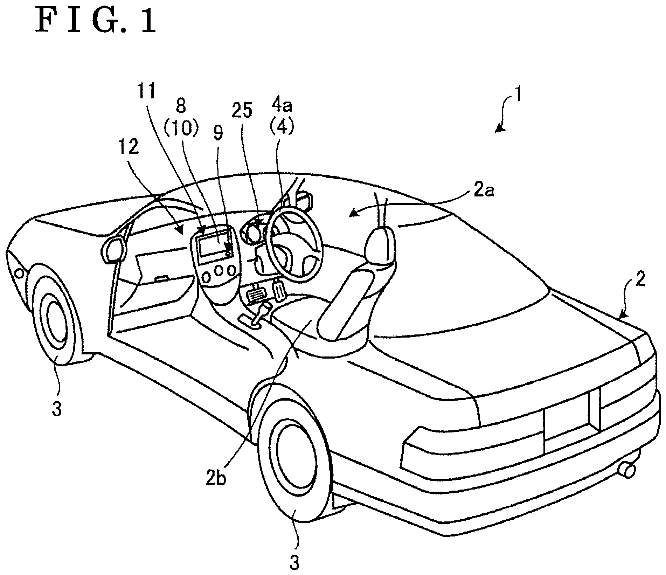

(First embodiment) First, a schematic configuration of a vehicle 1 according to a first embodiment will be described with reference to Figs. 1 to 5.

For example, the vehicle 1 according to the first embodiment may be a vehicle of which a drive source is an internal combustion engine including an engine (an internal combustion engine vehicle), for example. The vehicle 1 according to the first embodiment may be a vehicle of which a drive source is an electric machinery including a motor (an electric vehicle, a fuel-cell-powered vehicle), for example. The vehicle 1 may be a vehicle of which a drive source is both of the above-described drive sources (a hybrid vehicle). The vehicle 1 may be mounted with various speed changers and may be mounted with various apparatuses (systems, parts and components, for example) which are needed to drive the internal combustion engine and/or the electric machinery. For example, a type or form, the number, and a layout which are related to driving of wheels 3 of the vehicle 1 may be set in various ways.

As illustrated in Fig. 1, the vehicle 1 according to the first embodiment includes a vehicle body 2. The vehicle body 2 configures a vehicle cabin 2a which an occupant (not shown) is in. A steering portion 4 and an instrument panel 25 are provided inside the vehicle cabin 2a to correspond to a seat 2b of a driver (not shown in Fig. 1) serving as the occupant. For example, the steering portion 4 is a steering wheel 4a projecting from a dashboard 12.

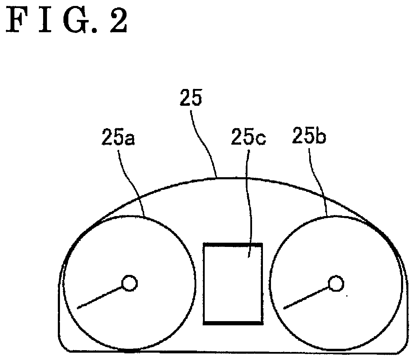

As illustrated in Fig. 2, a speed meter 25a, a tachometer 25b and a display apparatus 25c are provided at the instrumental panel 25. For example, the display apparatus 25c is a liquid crystal display and/or an organic EL (Electroluminescent) display, for example. In the example of Fig. 2, the display apparatus 25c is positioned at a substantially center of the instrument panel 25 to be interposed between the speed meter 25a and the tachometer 25b.

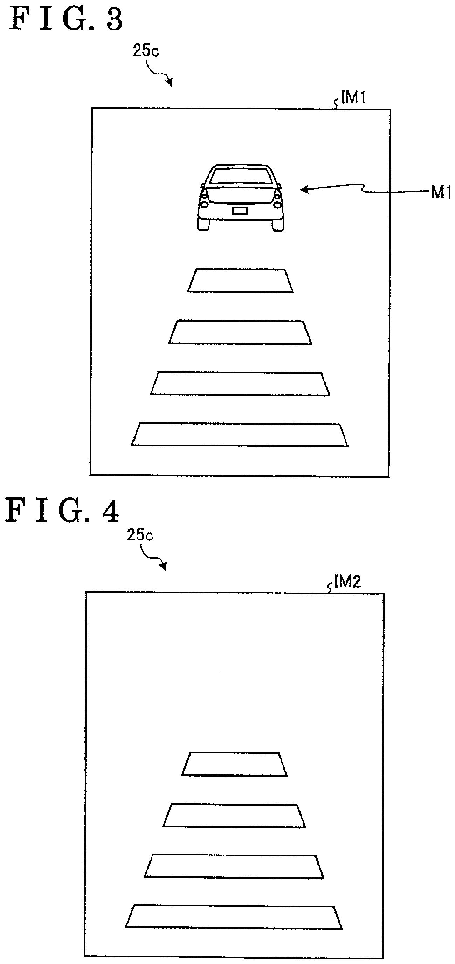

In the first embodiment, information related to a drive assist control that the vehicle 1 conducts is displayed on the display apparatus 25c of the instrument panel 25. An example of the drive assist control is a follow-up running control under which the vehicle 1 is caused to automatically follow a foregoing vehicle, for example. When the follow-up running control is being conducted, for example, information including presence or absence of a foregoing vehicle and/or a distance between the own vehicle and a foregoing vehicle is displayed on the display apparatus 25c in manners illustrated in Figs. 3 and 4, for example. Fig. 3 is an exemplary view illustrating an example of an image IM1 displayed on the display apparatus 25c in a case where a foregoing vehicle exists. In the image IM1 of Fig. 3, a mark M1 indicating the foregoing vehicle is displayed. Fig. 4 is an exemplary view illustrating an example of an image IM2 displayed on the display apparatus 25c in a case where a foregoing vehicle does not exist. Unlike with the image IM1 of Fig. 3, the mark M1 indicating the foregoing vehicle is not displayed in the image IM2 of Fig. 4.

Referring back to Fig. 1, a display apparatus 8 which is different from the above-described display apparatus 25c, and an audio output apparatus 9 are provided inside the vehicle cabin 2a. The display apparatus 8 is a liquid crystal display and/or an organic EL display, for example. The audio output apparatus 9 is a speaker, for example. In the example of Fig. 1, the display apparatus 8 and the audio output apparatus 9 are provided at a navigation apparatus 11 positioned at a central portion of the dashboard 12 in a vehicle width direction (the right and left direction), that is, at a so-called center console.

In the first embodiment, information (an image) including a current position of the vehicle 1 and/or route guidance to a destination is indicated on the display apparatus 8 of the navigation apparatus 11 while the vehicle 1 is running. The display apparatus 8 includes an operation input portion 10 such as a touch panel, for example. The occupant of the vehicle 1 can perform various operation inputs (command inputs) relative to the image displayed on the display apparatus 8 by touching the operation input portion 10 with his/her finger, for example. The navigation apparatus 11 may be provide with an operation input portion (not shown) including a switch, a dial, a joystick, a push button, for example.

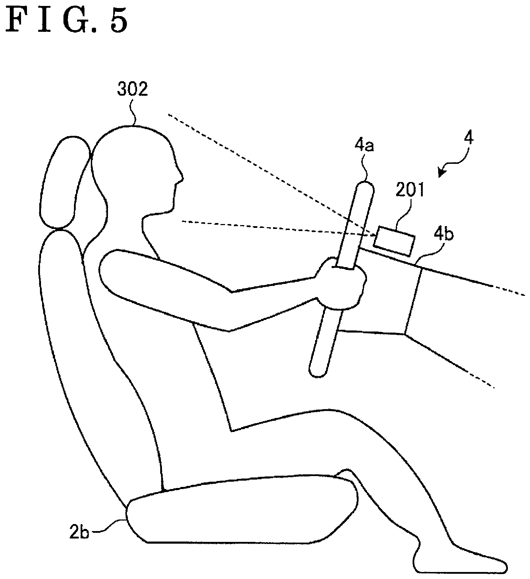

In the first embodiment, as illustrated in Fig. 5, an image-taking apparatus 201 is provided at a steering column 4b of the steering wheel 4a. The image-taking apparatus 201 is a CCD (Charge Coupled Device) camera, for example. A view angle and a posture of the image-taking apparatus 201 are adjusted such that the face of a driver 302 seated at the seat 2b is positioned at the center of a field of view of the image-taking apparatus 201. The image-taking apparatus 201 images or takes an image of the face of the driver 302 seated at the seat 2b, and the image-taking apparatus 201 sequentially outputs image data obtained by the imaging. The image-taking apparatus 201 may be positioned at a position at which the image-taking apparatus 201 can image a line of sight of the driver 302. For example, the image-taking apparatus 201 may be provided at the center console at which the navigation apparatus 11 is arranged, an A pillar at a driver seat side (at a side at which the seat 2b is) and/or a rearview mirror.

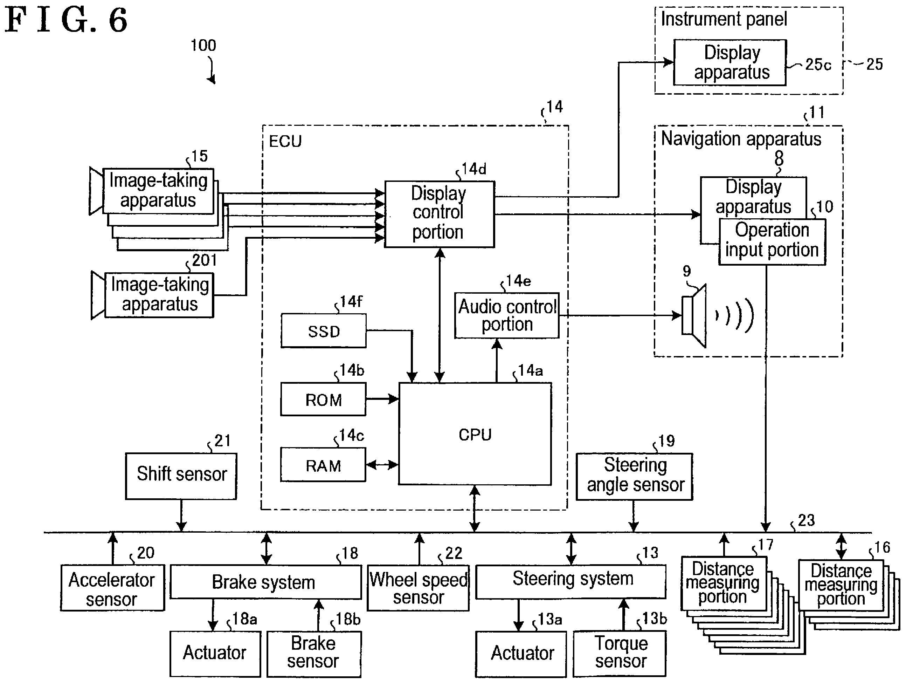

Next, with reference to Fig. 6, a configuration of a drive assist system 100 configured to be mounted on the vehicle 1 of the first embodiment will be described.

At the drive assist system 100, as illustrated in Fig. 6, for example, an ECU 14, the navigation system 11, a steering system 13, distance measuring portions 16 and 17, a brake system 18, a steering angle sensor 19, an accelerator sensor 20, a shift sensor 21 and a wheel speed sensor 22 are electrically connected to one another via an in-vehicle network 23 serving as an electric communication line. The ECU 14 is an example of "a drive assist apparatus".

The in-vehicle network 23 is configured as a CAN (Controller Area Network), for example. The ECU 14 sends a control signal via the in-vehicle network 23, and thereby causing an actuator 13a of the steering system 13 and/or an actuator 18a of the brake system 18 to work or to function. Via the in-vehicle network 23, the ECU 14 can receive detection results of a torque sensor 13b, a brake sensor 18b, the steering angle sensor 19, the distance measuring portions 16 and 17, the accelerator sensor 20, the shift sensor 21 and/or the wheel speed sensor 22, and an operation signal by the operation input portion 10, for example.

In the example of Fig. 6, the ECU 14 is provided with a CPU 14a (Central Processing Unit), ROM 14b (Read Only Memory), RAM 14c (Random Access Memory), a display control portion 14d, an audio control portion 14e, and SSD 14f (Solid State Drive, flash memory).

The CPU 14a totally controls the entire vehicle 1. The CPU 14a reads program installed in a non-volatile storage device including the ROM 14b, and performs calculation processing in accordance with the program. The RAM 14c temporarily stores various data used in the calculation at the CPU 14a.

Among the calculation processing performed at the ECU 14, the display control portion 14d mainly performs image processing using the image data obtained at an image-taking apparatus 15 and the image-taking apparatus 201, and/or composition of image data displayed on the display apparatus 8 and the display apparatus 25c. Among the calculation processing performed at the ECU 14, the audio control portion 14e mainly performs processing of audio data outputted at the audio output apparatus 9. The SSD 14f, which is a rewritable non-volatile storage device, can keep data even in a case where the power supply of the ECU 14 is switched off.

In the first embodiment, for example, the CPU 14a, the ROM 14b, the RAM 14c may be integrated within the same package. At the ECU 14, other logic operation processor and/or logic circuit including a DSP (Digital Signal Processor) may be used, instead of the CPU 14a. Instead of the SSD 14f (or in addition to the SSD 14f), an HDD (Hard Disk Drive) may be provided at the ECU 14. The SSD 14f and the HDD may be provided separately from the ECU 14.

The configurations, the arrangements, the manners of electric connection of the sensors and the actuators which are described above are examples, and may be set (changed) variously.

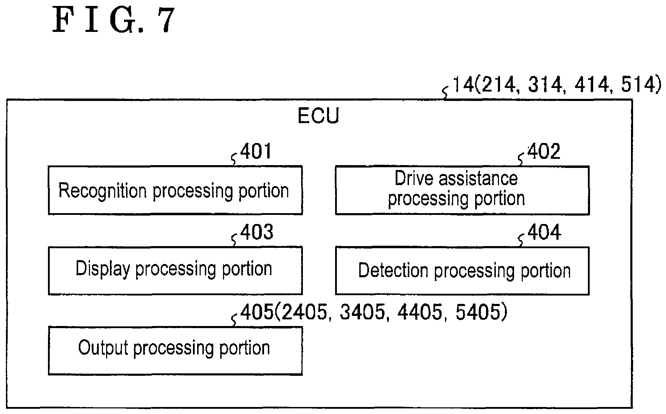

When the drive assist control is performed, the CPU 14a of the ECU 14 according to the first embodiment performs the program stored in the ROM 14b, and thus the CPU 14a realizes on the RAM 14c a functional configuration (a function module) shown, for example, in Fig. 7.

As illustrated in Fig. 7, the ECU 14 includes, as the functional configuration, a recognition processing portion 401, a drive assistance processing portion 402, a display processing portion 403, a detection processing portion 404 and an output processing portion 405.

The recognition processing portion 401 recognizes circumstances of surroundings of the vehicle 1 on the basis of, for example, the image data obtained from the image-taking apparatus 15. The drive assistance processing portion 402 performs the drive assist control depending on the circumstances or situation of the surroundings of the vehicle 1 which are recognized by the recognition processing portion 401. For example, in a case where the follow-up running control is performed as the drive assist control, the recognition processing portion 401 recognizes presence or absence of the foregoing vehicle, and/or the distance between the own vehicle and the foregoing vehicle. As an example, the explanation will be made hereunder only for a case in which the drive assist control serves as the follow-up running control, however, the drive assist control according to the first embodiment is not limited to the follow-up running control and may include a park assist control, for example. For simplification, the circumstances of the surroundings of the vehicle 1 which are recognized by the recognition processing portion 401 will be hereunder expressed by a term of recognized circumstances.

The display processing portion 403 controls the image to be displayed on the display apparatus 25c of the instrument panel 25 in accordance with the recognized circumstances recognized by the recognition processing portion 401. For example, in a case where it is recognized that a foregoing vehicle exists, the display processing portion 403 displays on the display apparatus 25c the image IM1 (refer to Fig. 3) that includes the mark M1 indicating the foregoing vehicle.

In a case where the recognized circumstances by the recognition processing portion 401 have changed, the display processing portion 403 according to the first embodiment displays change of the recognized circumstances on the display apparatus 25c. The change of the recognized circumstances includes a change which may serve as a trigger which switches control contents of the follow-up running control. In the follow-up running control, for example, when a state in which the existence of the foregoing vehicle is recognized changes to a state in which it is recognized that the foregoing vehicle does not exist, the control contents are automatically switched such that the vehicle 1 is automatically accelerated. Thus, when the follow-up control is being performed, when the state in which the existence of the foregoing vehicle is recognized changes to the state in which it is recognized that the foregoing vehicle does not exist, the display processing portion 403 according to the first embodiment switches the image to be displayed on the display apparatus 25c from the image IM1 (refer to Fig. 3) including therein the mark M1 indicating the foregoing vehicle to the image IM2 (refer to Fig. 4) that does not include the mark M1 indicating the foregoing vehicle.

The detection processing portion 404 detects information related to the line of sight of the driver 302 of the vehicle 1 (refer to Fig. 5). For example, the detection processing portion 404 detects an orientation or direction of the face of the driver 302, positions of the eyes of the driver 302, a direction in which the eyes of the driver 302 face (a direction of the line of sight) and movements of the eyes of the driver 302 on the basis of the imaging data obtained from the image-taking apparatus 201 and a three-dimensional face model which is stored in advance in the storage medium including the SSD 14f, while tracking the face of the driver 302. The three-dimensional face model is, for example, a three-dimensional face configuration of an average human test subject and/or a statistical face configuration model which includes, for example, positions of face parts of the human test subject such as eyes, a mouth and/or a nose, and change information of configuration of the eyes of the human test subject.

As described above, under the follow-up running control, for example, when the state in which the existence of the foregoing vehicle is recognized changes to the state in which it is recognized that the foregoing vehicle does not exist, the control contents are automatically switched such that the vehicle 1 is automatically accelerated. In some circumstances, however, it is inappropriate that the vehicle 1 is automatically accelerated when, for example, it is recognized that the foregoing vehicle does not exist even though a foregoing vehicle actually exists. In such cases, the driver 302 needs to visually recognizes, on the display apparatus 25c, the circumstances of the surroundings of the vehicle 1 which have been recognized by the recognition processing portion 401, and then needs to actually and visually observe the circumstances of the surroundings of the vehicle 1 and operate the vehicle 1 actively. Thus, in a case where the recognized circumstances recognized by the recognition processing portion 401 change, it is desired that the driver 302 is notified more reliably that such change in the recognized circumstances has occurred.

In a case where the recognized circumstances by the recognition processing portion 401 change, to prompt or encourage the driver 302 to visually recognize the display apparatus 25c, the output processing portion 405 according to the first embodiment uses another notifying unit (a notifying portion) which is different from the display apparatus 25c and notifies the driver 302 that the recognized circumstances have changed. Then, the output processing portion 405 monitors the detection results of the detection processing portion 404 and determines whether or not the driver 302 has actually conducted the visual recognition of the display apparatus 25c.

Specifically, in a case where the recognized circumstances have changed, the output processing portion 405 outputs a first notice by sound by using the audio output apparatus 9 of the navigation apparatus 11. The first notice notifies the driver 302 that the recognized circumstances have changed. In addition, after outputting the first notice, the output processing portion 405 monitors the detection result by the detection processing portion 404. In a case where it is not detected that the line of sight of the driver 302 is directed to or facing the display apparatus 25c, the output processing portion 405 outputs a second notice by sound by using the audio output apparatus 9. The second notice notifies the driver 302 again that the recognized circumstances have changed. The output processing portion 405 repeatedly outputs the second notice until it is detected that the line of sight of the driver 302 is directed to the display apparatus 25c.

The first notice is, for example, a sound message and/or a beep sound which prompts the driver 302 to visually recognize the display apparatus 25c. The second notice is, for example, a sound message and/or a beep sound which prompts more strongly the driver 302 to visually recognize the display apparatus 25c. As described above, the output processing portion 405 outputs the second notice in an output manner which is different from an output manner in which the first notice is outputted. In other words, the second notice is outputted as a reminder in a case where the first notice failed to make the line of sight of the driver 302 be directed to the display apparatus 25c. Thus, if the second notice were outputted in the same manner as the first notice, attention of the driver 302 might not be drawn sufficiently. Consequently, for example, the output processing portion 405 outputs the second notice with a higher sound volume than the first notice and/or the output processing portion 405 outputs the second notice in a sound pattern which is different from a sound pattern of the first notice (that is, in a sound pattern which prompts the attention more strongly than the first notice).

In a case where the output processing portion 405 outputs the second notice twice or more times, the output processing portion 405 outputs the second notice which is outputted for the second time or thereafter in an output manner which is different from an output manner of the second notice which was outputted in the past (for example, the second notice which was outputted for the first time). In other words, for example, the output processing portion 405 outputs the second notice outputted for the second time or thereafter with a higher sound volume than the second notice outputted for the first time, and/or the output processing portion 405 outputs the second notice outputted for the second time or thereafter in a sound pattern which prompts the attention more strongly than the second notice outputted for the first time, in order to enhance an attention-attracting-effect of the second notice outputted for the second time or thereafter than the second notice outputted for the first time.

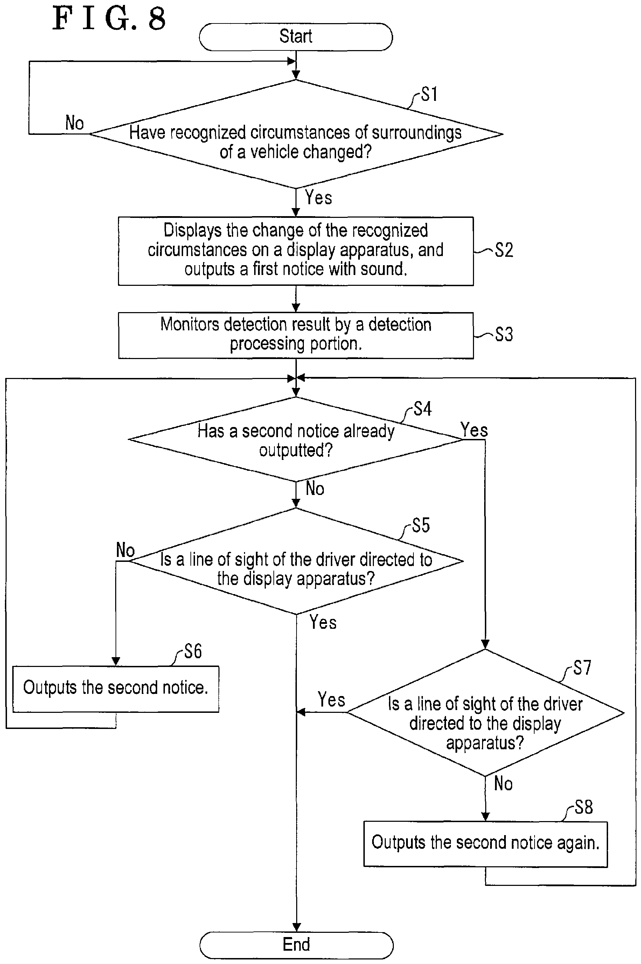

Next, processing executed by the ECU 14 according to the first embodiment will be described hereunder with reference to Fig. 8.

In the process flow of Fig. 8, first, at S1, the recognition processing portion 401 determines whether or not the recognized circumstances of the surroundings of the vehicle 1 have changed. The processing at S1 is repeated until it is determined that the recognized circumstances have changed. Then, in a case where it is determined at S1 that the recognized circumstances have changed, the process moves to S2.

At S2, the display processing portion 403 displays the change in the recognized circumstances on the display apparatus 25c of the instrument panel 25, and the output processing portion 405 outputs the first notice, which notifies that the recognized circumstances have changed, with sound via the audio output apparatus 9 of the navigation system 11. Then, at S3, the output processing portion 405 monitors the detection results by the detection processing portion 404.

At S4, the output processing portion 405 determines whether or not the second notice, which notifies again the driver 302 that the recognized circumstances have changed, has already been outputted.

In a case where the second notice has not outputted at S4, the process moves to S5. At S5, the output processing portion 405 determines whether or not it is detected that the line of sight of the driver 302 is directed to the display apparatus 25c, on the basis of a monitoring result of S3.

In a case where it is detected at S5 that the line of sight of the driver 302 is directed to the display apparatus 25c, it can be presumed that the driver 302 has visually recognized the display apparatus 25c. Because there is no need to encourage the driver 302 to visually recognize the display apparatus 25c any more, the process ends. However, in a case where it is not detected at S5 that the line of sight of the driver 302 is directed to the display apparatus 25c, the driver 302 needs to be encouraged or prompted again to visually recognize the display apparatus 25c.

At S6, the output processing portion 405 outputs the second notice, which notifies again the driver 302 that the recognized circumstances have changed, by sound via the audio output apparatus 9 of the navigation system 11 in the output manner which differs from the output manner of the first notice outputted at S2. For example, the output processing portion 405 outputs the second notice with the higher sound volume than the first notice and/or the output processing portion 405 outputs the second notice in a sound pattern which is different from the sound pattern of the first notice. Then, the process returns to S4.

In a case where it is determined at S4 that the second notice has already been outputted at least once, the process moves to S7. The output processing portion 405 determines at S7 whether or not it is detected that the line of sight of the driver 302 is directed to the display apparatus 25c on the basis of the monitoring result of S3.

In a case where it is detected at S7 that the line of sight of the driver 302 is directed to the display apparatus 25c, there is no need any more to encourage the driver 302 to visually recognize the display apparatus 25c, and accordingly the process ends. However, in a case where it is not detected at S7 that the line of sight of the driver 302 is directed to the display apparatus 25c, it cannot be estimated that the driver 302 has visually recognized the display apparatus 25c. Accordingly, there is a need to encourage or prompt again the driver 302 to visually recognize the display apparatus 25c.

At S8, the output processing portion 405 outputs again the second notice by sound, via the audio output apparatus 9. The output processing portion 405 causes the output manner of the second notice outputted at S8 to be different from the output manner of the second notice outputted in the past (for example, the second notice outputted at S6). Then, the process returns to S4.

As described above, in a case where the recognized circumstances by the recognition processing portion 401 change, the display processing portion 403 according to the first embodiment displays the change of the recognized circumstances on the display apparatus 25c of the instrument panel 25. In addition, in a case where the recognized circumstances change, the output processing portion 405 outputs the first notice, which notifies the driver 302 that the recognized circumstances have changed, by using another notifying portion (the audio output apparatus 9) that is different from the display apparatus 25c. After outputting the first notice, the output processing portion 405 monitors the detection result by the detection processing portion 404 and outputs the second notice, which notifies again the driver 302 that the recognized circumstances have changed, by using the audio output apparatus 9 in a case where it is not detected that the line of sight of the driver 302 is directed to the display apparatus 25c. Thus, with the use of the first notice and the second notice, the driver 302 can be made to visually recognize the change of the recognized circumstances more reliably.

The output processing portion 405 according to the first embodiment repeats outputting the second notice until it is detected that the line of sight of the driver 302 is directed to the display apparatus 25c. Thus, the driver 302 can be made to visually recognize the change of the recognized circumstances even more reliably.

The output processing portion 405 according to the first embodiment outputs the second notice in the output manner which is different from the first notice. In a case where the output processing portion 405 outputs the second notice twice or more times, the output processing portion 405 outputs the second notice from the second time and onwards in the output manner which is different from the second notice outputted in the past. Thus, for example, by improving the attention-attracting-effect of the notice that is outputted at a latter time, the driver 302 is made to visually recognize the change of the recognized circumstances more reliably.

(Second embodiment) Next, a configuration of an ECU 214 according to a second embodiment will be described with reference to Fig. 7. In the first embodiment, the condition which stops the output of the second notice for the second time or thereafter is one condition, that is, the line of sight of the driver 302 is directed to or facing the display apparatus 25c. The second embodiment differs from the first embodiment in that the condition which stops the output of the second notice for the second time or thereafter includes two conditions. The two conditions which stop the output of the second notice for the second time or thereafter are that the line of sight of the driver 302 is directed to the display apparatus 25c and that the number of times of outputting the second notice becomes equal to or more than a predetermined number of times.

That is, in a case where the second notice is outputted twice or more times, after the second notice is outputted for the first time, an output processing portion 2405 according to the second embodiment outputs the second notice repeatedly until the predetermined number of times is reached. More specifically, in a case where the output processing portion 2405 outputs the second notice twice or more, after the second notice is outputted for the first time, the output processing portion 2405 stops, from a viewpoint of annoyance, the repetitive outputs of the second notice when the number of times of the output of the second notice becomes equal to or more than the predetermined number of times even though it has not been detected that the line of sight of the driver 302 is directed to the display apparatus 25c. As the number of times which serves as an output stop condition of the second notice, a number decided through an experiment or a number decided on the basis of ergonomics may be set in advance, or it may be set such that the driver 302 can decide arbitrarily.

The other configuration of the second embodiment is similar to the configuration of the first embodiment described above, and thus the explanation is omitted here.

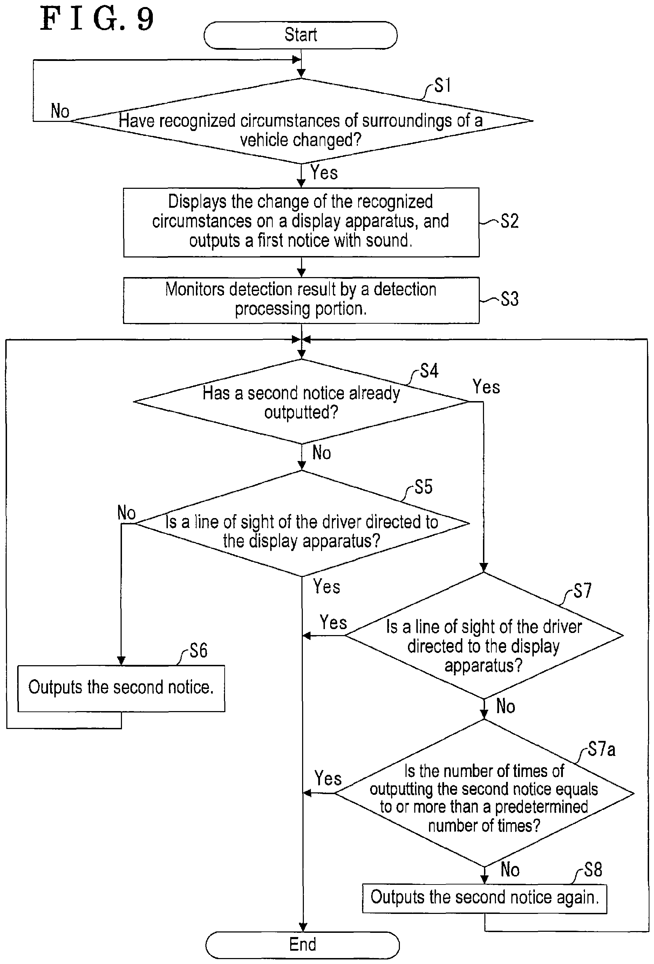

Next, processing executed by the ECU 214 according to the second embodiment will be described with reference to Fig. 9. In the second embodiment, the processes of S1 to S8 which are same as the above-described first embodiment (refer to Fig. 8) are executed. The second embodiment includes another determination standard on whether or not the second notice should be outputted again, in addition to the determination standard in the first embodiment, that is, whether or not the line of sight of the driver 302 is directed to the display apparatus 25c (S7). In this aspect, the second embodiment differs from the first embodiment.

In other words, in the process flow according to the second embodiment (refer to Fig. 9), in a case where it is determined at S7 that the line of sight of the driver 302 is not directed to the display apparatus 25c, the process moves to S7a. At S7a, the output processing portion 2405 determines whether or not the number of times that the second notice, which has already been outputted, have outputted is equal to or more than the predetermined number of times. The predetermined number of times is the number of times serving as a threshold of whether or not the driver 302 feels an excessive troublesomeness. The predetermined number of times may be a number decided through an experiment or a number decided on the basis of ergonomics, or a number set by the driver 302 arbitrarily.

In a case where it is determined at S7a that the number of times of the output of the second notice is less than the predetermined number of times, the driver 302 will not feel troublesome excessively even if the second notice is outputted again. Accordingly, in this case, the second notice is outputted again at S8, and the process returns to S4.

In contrast, in a case where it is determined at S7a that the number of times of the output of the second notice is equal to or more than the predetermined number of times, the driver 302 will feel troublesome excessively if the second notice is outputted again. Accordingly, in this case, the process ends without outputting the second notice again.

As described above, in the second embodiment, in a case where the second notice is outputted twice or more, after the second notice is outputted for the first time, the second notice is outputted again if the line of sight of the driver 302 is directed to the display apparatus 25c and the number of times of the output of the second notice is less than the predetermined number of times. Accordingly, it can be restricted that the driver 302 feels an excessive troublesomeness due to the repeated outputs of the second notice.

The other effects of the second embodiment are similar to the effects of the first embodiment, and thus the explanation is omitted here.

(Third embodiment) Next, a configuration of an ECU 314 according to a third embodiment will be described with reference to Fig. 7. The third embodiment is similar to the second embodiment because the third embodiment includes another condition which stops the output of the second notice for the second time or thereafter, in addition to the condition that the line of sight of the driver 302 is directed to the display apparatus 25c. However, contents of said another condition differ from the second embodiment.

Specifically, in a case where the second notice is outputted twice or more, an output processing portion 3405 according to the third embodiment outputs the second notice repeatedly until it is detected that the line of sight of the driver 302 is directed to the display apparatus 25c and the driver 302 performs a predetermined active action of the eye, after the second notice is outputted for the first time. For example, the predetermined active action of the eye is blink that is performed actively for a predetermined number of times and/or at predetermined intervals, for example. That is, in the third embodiment, in order to prevent the second notice from being outputted twice or more, the driver 302 needs to look at the display apparatus 25c and to perform the predetermined eye operation including, for example, the blink.

The other configuration of the third embodiment is similar to the configuration of the second embodiment which is described above, and thus the explanation is omitted here.

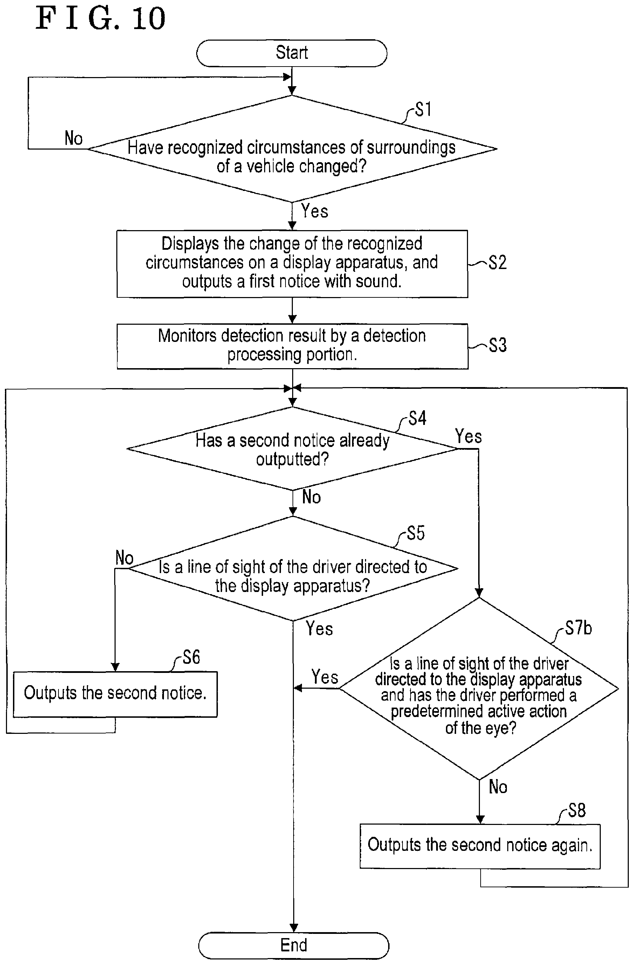

Next, processing executed by the ECU 314 according to the third embodiment will be described with reference to Fig. 10. Similarly to the second embodiment, the processes of S1 to S6 and S8 which are similar to the first embodiment (refer to Fig. 8) are executed in the third embodiment. In the third embodiment, however, in a case where the second notice is outputted twice or more (Yes at S4), it is determined whether or not the second notice should be outputted again (S8) on the basis of a standard which is different from the standard of the second embodiment.

That is, in the process flow according to the third embodiment (refer to Fig. 10), in a case where it is determined at S4 that the second notice has already been outputted at least once, the process moves to S7b. At S7b, the output processing portion 3405 determines whether or not it is detected that the line of sight of the driver 302 is directed to the display apparatus 25c and it is detected that the driver 302 has performed the predetermined active action of the eye. For example, the predetermined active action of the eye is blink that is performed actively for a predetermined number of times and/or at predetermined intervals, for example.

At S7b, in a case where it is detected that the line of sight of the driver 302 is directed to the display apparatus 25c and it is detected that the driver 302 has performed the predetermined active action of the eye, there is no need to encourage or prompt the driver 302 to visually recognize the display apparatus 25c anymore, and accordingly the process ends. However, at S7b, in a case where it is not detected that the line of sight of the driver 32 is directed to the display apparatus 25c, or in a case where it is not detected that the driver 302 has performed the predetermined active action of the eye even though it is detected that the line of sight of the driver 32 is directed to the display apparatus 25c, it cannot be estimated that the driver 302 has actively and reliably performed the visual recognition of the display apparatus 25c. Accordingly, in this case, at S8, the output processing portion 3405 outputs again the second notice in order to encourage the driver 302 again to visually recognize the display apparatus 25c, and then the process returns to S4.

As described above, in a case where the output processing portion 3405 according to the third embodiment outputs the second notice twice or more times, after outputting the second notice for the first time, the output process portion 3405 outputs the second notice repeatedly until it is detected that the line of sights of the driver 302 is directed to the display apparatus 25c and that the driver 302 has performed the predetermined active action of the eyes. For example, the predetermined active action of the eye is blink performed actively for a predetermined number of times and/or at predetermined intervals, for example. Accordingly, it is determined more reliably whether or not the driver 302 has looked at the display apparatus 25c actively.

The other effects of the third embodiment are similar to the effects of the second embodiment, and thus the explanation is omitted here.

(Fourth embodiment) Next, a configuration of an ECU 414 according to a fourth embodiment will be described with reference to Figs. 7, 11 and 12. The fourth embodiment is similar to the aforementioned first to third embodiments in that the first notice notifies the driver 302 that the change has occurred to the circumstances of the surroundings of the vehicle 1. However, the fourth embodiment differs from the aforementioned first to third embodiments in that, in a case where the circumstances of the surroundings of the vehicle 1 have changed, appropriateness of a driving posture of the driver 302 is checked and the driver 302 is encouraged to correct or improve the driving posture if necessary, and accordingly the driver 302 is made to confirm the change of the circumstances of the surroundings of the vehicle 1 more reliably.

In the techniques such as the first to third embodiments which notify the driver 302 that the change has occurred to the circumstances of the surroundings of the vehicle 1, the notice to the driver 302 is issued in a case where it is correctly recognized that the circumstances of the surroundings of the vehicle 1 have actually changed and also in a case where it is incorrectly recognized that the circumstances of the surroundings of the vehicle 1 have changed even though the circumstances have not actually changed. Accordingly, in a case where the notice which notifies that the circumstances of the surroundings of the vehicle 1 have changed is issued, the driver 302 needs to correct the driving posture if the driver 302 is performing, for example, a one-handed driving operation and/or an inattentive driving in an inappropriate driving posture, and to confirm the change of the circumstances of the surroundings of the vehicle 1, and then the driver 302 needs to drive carefully. Therefore, in a case where the circumstances of the surroundings of the vehicle 1 have changed, it is desired that the driver 302 is prompted to correct his driving posture as needed and that the driver 302 is made to confirm the change of the circumstances of the surroundings of the vehicle 1 more reliably.

In a case where the recognized circumstances by the recognition processing portion 401 has changed, an output processing portion 4405 of the ECU 414 according to the fourth embodiment (refer to Fig. 7) monitors the detection result of the detection processing portion 404 and determines whether or not the driving posture, including a direction of the line of sight, of the driver 302 is appropriate. Specifically, the output processing portion 4405 determines that the driving posture is appropriate in a case where it is detected that the driving posture satisfies a predetermined condition, and the output processing portion 4405 determines that the driving posture is inappropriate in a case where it is detected that the driving posture does not satisfy the predetermined condition.

For example, the driving posture's satisfying the predetermined condition corresponds to that the direction of the line of sight of the driver 302 is detected normally and the line of sight of the driver 302 is directed within a range of a predetermined angle relative to a travelling direction of the vehicle 1.

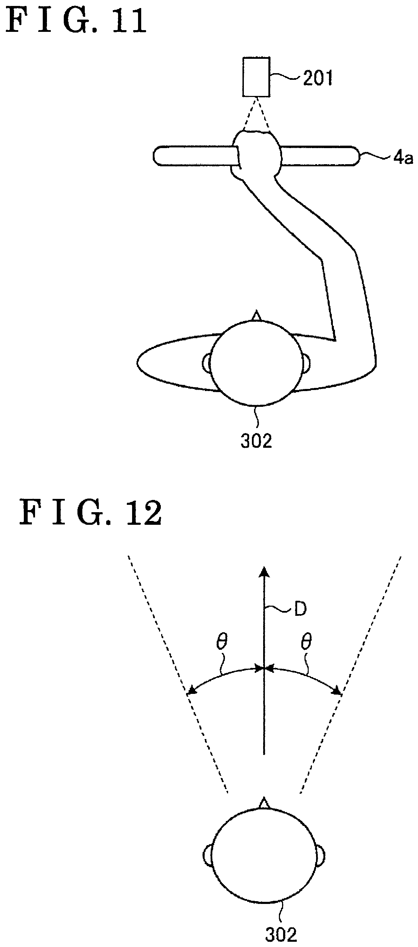

The condition that the direction of the line of sight of the driver 302 is detected normally serves as a determination standard on whether or not the driver 302 is performing the one-handed driving operation. As described above, the image-taking apparatus 201 is provided at the steering column 4b (refer to Fig. 5). Accordingly, in a case where the driver 302 is operating the steering wheel 4a in only one hand as illustrated in Fig. 11, the one hand is likely to be positioned at a position which blocks the field of view of the image-taking apparatus 201. Consequently, in a case where the direction of the line of the sight of the driver 302 is not detected normally, it can be determined that there is a high possibility that the driver 302 is performing the one-handed driving operation.

In addition, the condition that the line of sight of the driver 302 is directed within the range of the predetermined angle relative to the travelling direction of the vehicle 1 serves as a determination standard on whether or not the driver 302 is performing the inattentive driving including driving while looking away. For example, as illustrated in Fig. 12, where the travelling direction of the vehicle 1 is a direction D, in a case where the line of sight of the driver 302 is directed within a range of a predetermined angle θ at each side relative to the direction D, it can be determined that the driver 302 is not performing the inattentive driving.

The above-described predetermined condition related to the driving posture is appropriately changed according to an installation position of the image-taking apparatus 201. That is, in a case where the image-taking apparatus 201 is provided at, for example, the center console instead of at the steering column 4b, the situation where the line of sight of the driver 302 is blocked with his/her hand is not likely to occur. Therefore, the first condition out of the above-described two conditions (that is, the condition that the direction of the line of sight of the driver 302 is detected normally) may be replaced by other condition. The other condition may include, for example, whether or not a central position of the steering column 4b in the right and left direction and a central position of the face of the driver 302 in the right and left direction disagree with each other largely. In a case where the respective central positions largely disagree with each other, it can be determined that the driver 302 is having an inappropriate driving posture.

In a case where it is detected that the driving posture of the driver 302 does not satisfy the above-described two conditions, the output processing portion 4405 outputs a first warning with sound with the use of the audio output apparatus 9. The first warning warns the driver 302 that the driving posture does not satisfy the conditions. That is, in a case where it is detected that the driving posture does not satisfy the above-described conditions, the output processing portion 4405 determines that the driving posture of the driver 302 is inappropriate, and encourages or prompts the driver 302 with the first warning to correct the driving posture. For example, the first warning is a sound message and/or a beep sound which include a sense of warning. A sound volume or a sound pattern of the first waring is adjusted such that some uncomfortable feeling is given to the driver 302, for example.

If the state, in which it is detected that the driving posture of the driver 302 does not satisfy the above-described two conditions, persists even after the first warning is outputted, the output processing portion 4405 outputs a second warning with sound with the use of the audio output apparatus 9. The second warning warns the driver 302 again that the driving posture does not satisfy the conditions. The output processing portion 4405 outputs the second warning repeatedly until it is detected that the driving posture satisfies the conditions. The second warning is a sound message and/or a beep sound which include a sense of warning which is stronger than the first warning. A sound volume or a sound pattern of the second waring is adjusted such that uncomfortable feeling given to the driver 302 is greater than the first warning, for example.

As described above, the output processing portion 4405 outputs the second warning in an output manner which is different from an output manner of the first warning. In other words, the second warning is outputted to serve as the reminder in a case where the first warning failed to correct the driving posture of the driver 302. Thus, if the second warning were outputted in the same manner as the first warning, the attention of the driver 302 might not be drawn sufficiently. Consequently, for example, the output processing portion 4405 outputs the second warning with a higher sound volume than the first warning and/or the output processing portion 4405 outputs the second warning in a sound pattern which is different from a sound pattern of the first warning (that is, in a sound pattern including a higher attention-attracting-effect than the first warning).

In a case where it is detected that the driving posture of the driver 302 satisfies the above-described two conditions, the output processing portion 4405 determines that the driving posture of the driver 302 does not pose any problem, and outputs the first notice which simply notifies the driver 302 that the recognized circumstances have changed, with the use of the audio output apparatus 9. Contrary to the first warning, the first notice is the sound message or the beep sound for encouraging the driver 302 to visually recognize the display apparatus 25c and does not include the sense of warning. Accordingly, compared to the first warning, the first notice is set to include a smaller sound volume, or the first notice is set to include a sound pattern with less uncomfortable feeling to the driver 302.

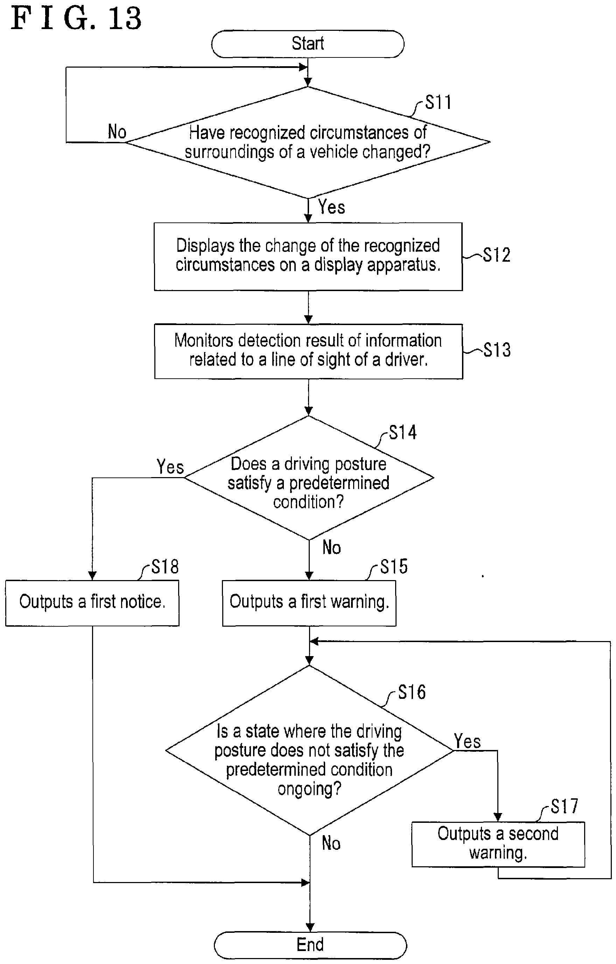

Next, processing executed by the ECU 414 according to the fourth embodiment will be described with reference to Fig. 13.

In the process flow of Fig. 13, first, the recognition processing portion 401 determines at S11 whether or not the recognized circumstances of the surroundings of the vehicle 1 have changed. The process at S11 is repeated until it is determined that the recognized circumstances have changed. In a case where it is determined at S11 that the recognized circumstances have changed, the process moves to S12.

At S12, the display processing portion 403 displays the change of the recognized circumstances on the display apparatus 25c of the instrument panel 25. Then, at S13, the output processing portion 4405 monitors the detection result by the detection processing portion 404, that is, the detection result related to the line of sight of the driver 302.

At S14, the output processing portion 4405 determines whether or not it is detected that the driving posture including the direction of the line of sight of the driver 302 satisfies the predetermined condition, on the basis of the monitor results of S13. The driving posture's satisfying the predetermined condition is that the information related to the line of sight of the driver 302 is detected in a normal way and it is detected that the line of sight of the driver 302 is directed towards the direction within the range of the predetermined angle relative to the travelling direction of the vehicle 1. Thus, the output processing portion 4405 determines whether or not the driver 302 is having the inappropriate driving posture such as the one-handed driving operation and/or the inattentive driving operation.

In a case where it is detected at S14 that the driving posture does not satisfy the predetermined condition, it can be determined that the driving posture of the driver 302 is inappropriate. Therefore, the driver 302 needs to be encouraged to correct the driving posture. Thus, at S15, the output processing portion 4405 outputs the first warning with sound via the audio output apparatus 9. The first warning warns the driver 302 that the driving posture does not satisfy the predetermined condition. At S16, the output processing portion 4405 determines whether or not the state in which the driving posture does not satisfy the predetermined condition is ongoing.

In a case where it is determined at S16 that the state in which the driving posture does not satisfy the predetermined condition is continued, that is, in a case where the driving posture of the driver 302 is not improved even though the first warning has outputted, the driver 302 needs to be strongly prompted to correct the driving posture. At S17, the output processing portion 4405 outputs the second warning with sound via the audio output apparatus 9. The second warning warns again the driver 302 that the driving posture does not meet the predetermined condition. For example, the output processing portion 4405 outputs the second warning with a higher sound volume than the first warning, or in the sound patter which is different from the first warning. Then, the process returns to S16.

In contrast, in a case where it is determined at S16 that the state in which the driving posture does not satisfy the predetermined condition is not ongoing, it can be determined that the driving posture of the driver 302 is improved by following the first warning. In this case, therefore, the second warning is not outputted and the process ends.

In a case where it is detected at S14 that the driving posture satisfies the predetermined condition, it can be determined that the driver 302 is not performing the one-hand driving operation and/or the inattentive driving. Therefore, there is no need to issue the warning to the driver 302 which warns to correct the driving posture. At S18, the output processing portion 4405 outputs the first notice with sound via the audio output apparatus 9. The first notice notifies that the recognized circumstances have changed. Then, the process ends.

As described above, in a case where the recognized circumstances of the surroundings of the vehicle 1 have changed, the output processing portion 4405 according to the fourth embodiment monitors the detection result detected by the detection processing portion 404. In a case where it is detected that the driving posture of the driver 302 which includes the direction of the line of sight of the driver 302 satisfies the predetermined condition, the output processing portion 4405 outputs the first notice notifying the driver 302 that the recognized circumstances have changed. In a case where it is detected that the driving posture of the driver 302 which includes the direction of the line of sight of the driver 302 does not satisfy the predetermined condition, the output processing portion 4405 outputs the first warning that warns the driver 302 that the driving posture does not satisfy the predetermined condition. Consequently, in a case where the recognized circumstances have changed, the driver 302 is prompted, with the use of the first notice and the first warning, to correct the driving posture if needed, thereby to make the driver 302 confirm the change of the recognized circumstances more reliably.

In the fourth embodiment, the satisfaction of the predetermined condition of the driving posture corresponds to that the direction of the line of sight of the driver 302 is detected normally and the line of sight of the driver 302 is directed within the range of the predetermined angle relative to the moving direction of the vehicle 1. Thus, by using the two conditions, it can be easily determined whether or not the driver 302 is performing, for example, the one-handed driving operation and/or the inattentive driving.

If the state where it is detected that the driving posture does not satisfy the predetermined condition persists even after the first warning is outputted, the output processing portion 4405 according to the fourth embodiment repeats outputting the second warning that warns the driver 302 again that the driving posture does not satisfy the predetermined condition until it is detected that the driving posture satisfies the predetermined condition. Thus, with the use of the second warning, the driver 302 can be prompted more strongly to correct the driving posture.

The output processing portion 4405 according to the fourth embodiment uses the audio output apparatus 9 capable of outputting sound, and outputs the first notice or the first warning, with sound. Thus, with the use of the sound, the driver 302 can be prompted more easily to correct the driving posture if needed, and the driver 302 can be made to confirm the change of the recognized circumstances more easily.

(Fifth embodiment) Next, a configuration of an ECU 514 according to a firth embodiment will be described with reference to Fig. 7. The fifth embodiment is similar to the fourth embodiment in that the fifth embodiment is configured to output the first notice and the first warning. However, unlike with the fourth embodiment in which the notice, which is outputted in a case where the driving posture of the driver 302 is appropriate and notifies that the recognized circumstances have changed, is performed only once by the first notice, the notice notifying that the recognized circumstances have changed can be performed twice or more by the first notice and the second notice in the fifth embodiment. The fifth embodiment differs from the fourth embodiment in that the notice of the occurrence of the change in the recognized circumstances can be executed twice or more via the first notice and the second notice.

That is, after outputting the first notice notifying the driver 302 that the recognized circumstances have changed, an output processing portion 5405 of the ECU 514 (refer to Fig. 7) according to the fifth embodiment determines whether or not the line of sight of the driver 302 is directed to or facing the display apparatus 25c and determines whether or not the driver 302 has visually recognized the display apparatus 25c in accordance with the first notice. In a case where it is not detected that the line of sight of the driver 302 is directed to the display apparatus 25c, the output processing portion 5405 outputs the second notice that notifies the driver 302 again that the recognized circumstances have changed. The output processing portion 5405 repeatedly outputs the second notice until it is detected that the line of sight of the driver 302 is directed to the display apparatus25c.

For example, the first notice is a sound message and/or a beep sound which encourages or prompts the driver 302 to visually recognize the display apparatus 25c. For example, the second notice is a sound message and/or a beep which encourages or prompts the driver 302 more strongly to visually recognize the display apparatus 25c. As described above, the output processing portion 5405 outputs the second notice in the output manner which is different from the output manner of the first notice. In other words, the second notice is outputted to serve as the reminder in a case where the first notice failed to make the line of sight of the driver 302 be directed to the display apparatus 25c. Thus, if the second notice were outputted in the same manner as the first notice, the attention of the driver 302 might not be drawn sufficiently. Consequently, for example, the output processing portion 5405 outputs the second notice with a higher sound volume than the first notice and/or the output processing portion 5405 outputs the second notice in a sound pattern which is different from a sound pattern of the first notice (that is, in a sound pattern including a higher attention-attracting-effect than the first notice).

The other configuration of the fifth embodiment is similar to the configuration of the aforementioned fourth embodiment, and thus the explanation is omitted here.

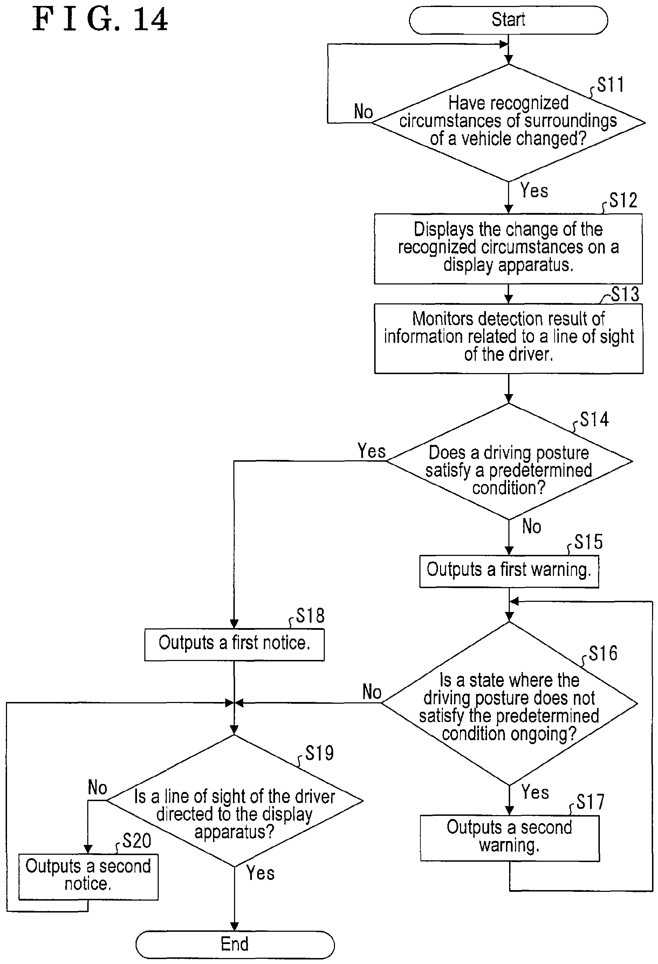

Next, processing executed by the ECU 514 according to the fifth embodiment will be described with reference to Fig. 14. In the fifth embodiment, the processes of S11 to S18 that are similar to the aforementioned fourth embodiment (refer to Fig. 10) are conducted. In the fourth embodiment, in a case where it is determined that the state in which the driving posture does not satisfy the predetermined condition is not ongoing after the first warning is outputted (S16; No), and in a case where the first notice is outputted (S18), the process ends. In the fifth embodiment, however, in a case where it is determined that the state in which the driving posture does not satisfy the predetermined condition is not ongoing after the first warning is outputted (S16; No), and in a case where the first notice is outputted (S18), the process moves to S19.

At S19, the output processing portion 5405 determines whether or not the line of sight of the driver 302 is directed to the display apparatus 25c of the instrument panel 25.

In a case where it is determined at S19 that the line of sight of the driver 302 is directed to the display apparatus 25c, it can be estimated or presumed that the driver 302 has visually recognized the display apparatus 25c. Accordingly, there is a need to encourage or prompt the driver 302 to visually recognize the display apparatus 25c anymore, and thus the process ends. However, in a case where it is not determined at S19 that the line of sight of the driver 302 is directed to the display apparatus 25c, the driver 302 needs to be encouraged or prompted again to visually recognize the display apparatus 25c.

At S20, the output processing portion 5405 outputs the second notice, which notifies the driver 302 again that the recognized circumstances have changed, with sound via the audio output apparatus 9. The output processing portion 5405 outputs the second notice in an output manner which is different from the output manner of the first notice outputted at S18 so that the driver 302 is prompted more strongly to visually recognize the display apparatus 25c. For example, the output processing portion 5405 outputs the second notice in a higher sound volume than the first notice and/or the output processing portion 5405 outputs the second notice in a sound pattern which is different from a sound pattern of the first notice. Then, the process returns to S19.

In Fig. 14, an example of the process flow executed by the ECU 514 is shown. In the example flow of Fig. 14, the process moves to S19 in a case where it is determined at S16 that the state in which the driving posture does not satisfy the predetermined condition is not continued. However, as another example, the ECU 514 may execute a process flow in which the process moves to S18 in a case where it is determined at S16 that the state in which the driving posture does not satisfy the predetermined condition is not continued.

As described above, in a case where it is not detected that the line of sight of the driver 302 is directed to the display apparatus 25c after the first notice was outputted, the output processing portion 5405 according to the fifth embodiment outputs repeatedly the second notice notifying again the driver 302 that the recognized circumstances have changed until it is detected that the line of sight of the driver 302 is directed to the display apparatus 25c. Consequently, the driver is made to visually recognize the change of the recognized circumstances more reliably via the second notice.

The other effects of the fifth embodiment are similar to the effects of the fourth embodiment, and thus the explanation is omitted here.

(Variation) In the aforementioned embodiments, the examples are shown in which each of the modules of Fig. 7 is realized by cooperation of the software (the computer program) and the hardware (the CPU 14a) with each other. However, each of the modules of Fig. 7 may be realized only with hardware. That is, in the embodiments, hardware (circuit) which corresponds exclusively to each module of Fig. 7 may be provided.

In the aforementioned embodiments, the examples in which the control is executed on the basis of the line of sight of the driver 302 are shown, however, a direction of the face may be used instead of the line of sight.

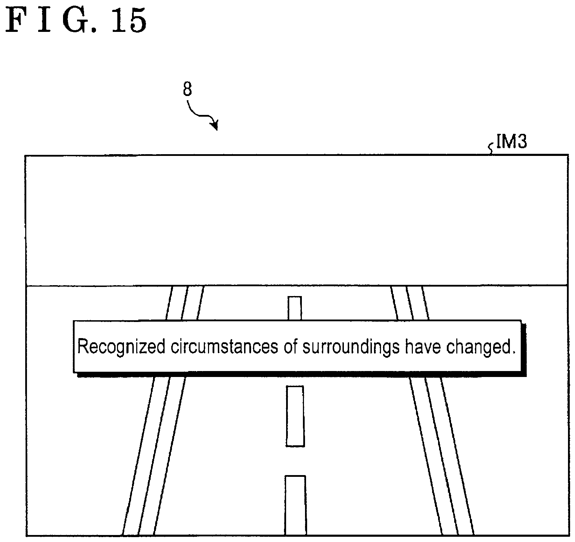

In the aforementioned embodiments, the examples are shown in which the first notice and the second notice, which notify the driver 302 that the recognized circumstances have changed, are outputted as the sound from the audio output apparatus 9. However, the first notice and the second notice may be outputted as light and/or vibration, for example. The first notice and the second notice may be outputted from, for example, a speaker apparatus other than the audio output apparatus 9 provided at the navigation apparatus 11. The first notice and the second notice may be outputted as an image IM3 as illustrated in Fig. 15, for example. The image IM3 may be outputted at the same time with the sound notifying the driver 302 that the recognized circumstances have changed.

The Image IM3 of Fig. 15 is an image outputted to the display apparatus 8 of the navigation apparatus 11 and includes a message that the change has occurred to the recognized circumstances. In the aforementioned embodiments, the examples are shown in which the repetitive outputs of the second notice are stopped subject to, as one condition, the detection of the line of sight of the driver 302 being directed to the display apparatus 25c of the instrument panel 25. However, for example, in a case where an image such as the image IM3 exemplary shown in Fig. 15 is outputted as the first notice and the second notice, the repeated outputs of the second notice may be stopped on the condition that it is detected the line of sight of the driver 302 is directed to the display apparatus 8 of the navigation apparatus 11, which serves as one condition.

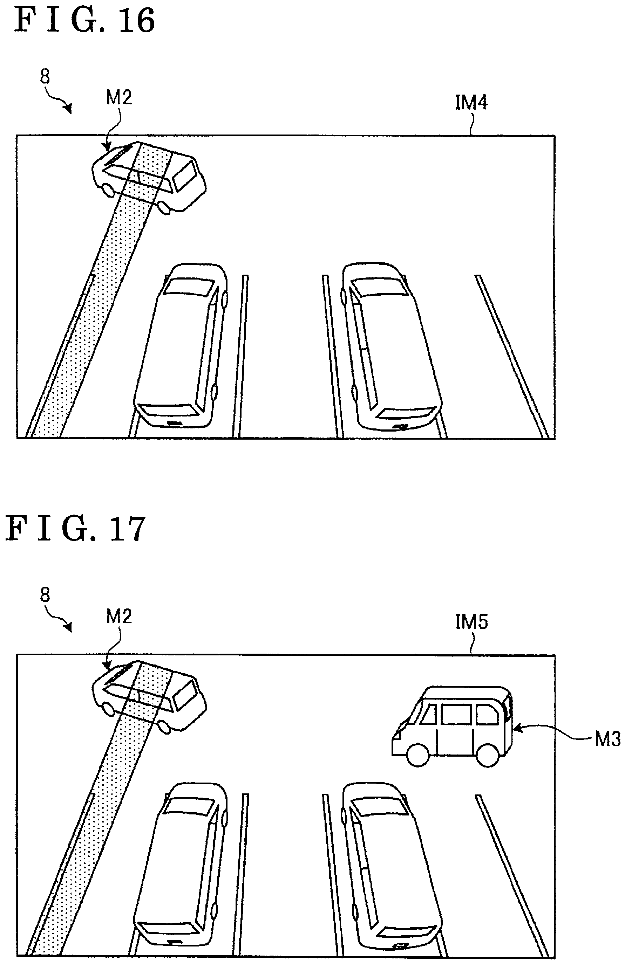

In the aforementioned embodiments, the process of a case in which the follow-up running control is conducted as an example of the drive assist control is mainly described. However, as will be described below, also in a case where the park assist control is conducted as another example of the drive assist control, a situation arises where it is desired that the driver 302 are made to confirm the change of the recognized circumstances. For example, in a case where an object requiring attention which was not recognized at a start of the parking is newly recognized in the course of the parking or, contrary to this, in a case where an object requiring attention which was recognized at the start of the parking comes not to be recognized in the course of the parking, there arises a need that the driver 302 confirms the change of the circumstances of the surroundings of the vehicle. More specific explanation will be made below for a change of the recognized circumstances in the park assist control and a process executed at an occurrence of such a change, with reference to Figs. 16 to 23.

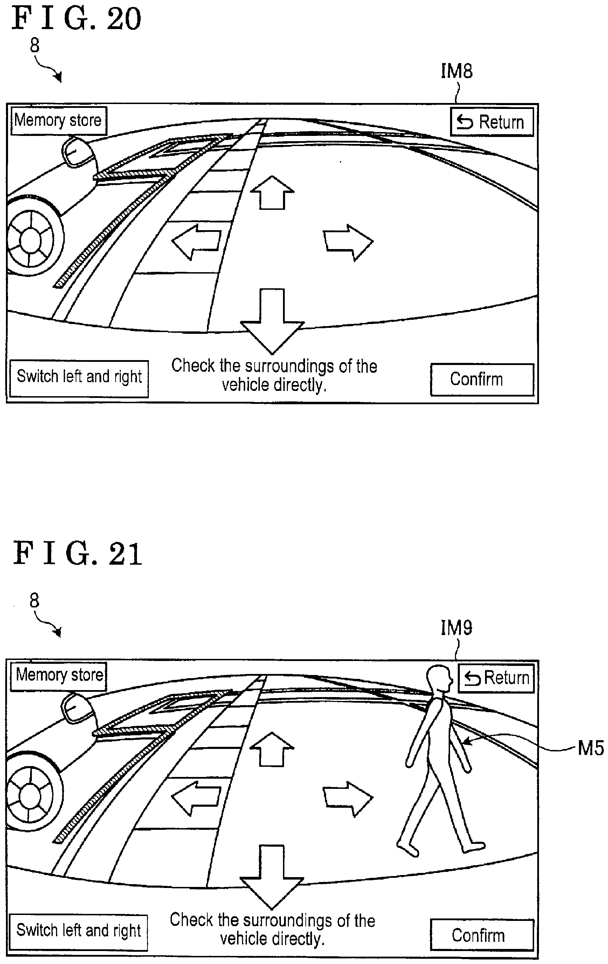

As an example of a park assist image displayed on the display apparatus 8 of the navigation apparatus 11 at a time of execution of the park assist control, Figs. 16 to 19 each shows the park assist image in which circumstances of surroundings of the vehicle 1 (surroundings of a parking place) are viewed from a higher perspective viewpoint. As another example of the park assist image, Figs. 20 to 23 each shows the park assist image in which the circumstances of the surroundings of the vehicle 1 (the surroundings of the parking place) are viewed in a field of view at a rear side relative to the vehicle 1. In each of the park assist images of Figs. 16 to 19, which are viewed from the higher perspective view point, a mark M2 corresponding to the vehicle 1 is indicated.

Figs. 16 and 17 show an example of the change occurred to the park assist image viewed from the higher perspective view point in a case where the object requiring attention which was not recognized when the parking operation started is newly recognized in mid-course of the parking. In this example, because another vehicle serving as the object requiring attention is newly recognized, an image IM4 (refer to Fig. 16) at the start of the parking is switched or changed to an image IM5 (refer to Fig. 17) including a mark M3 indicating the newly-recognized another vehicle.

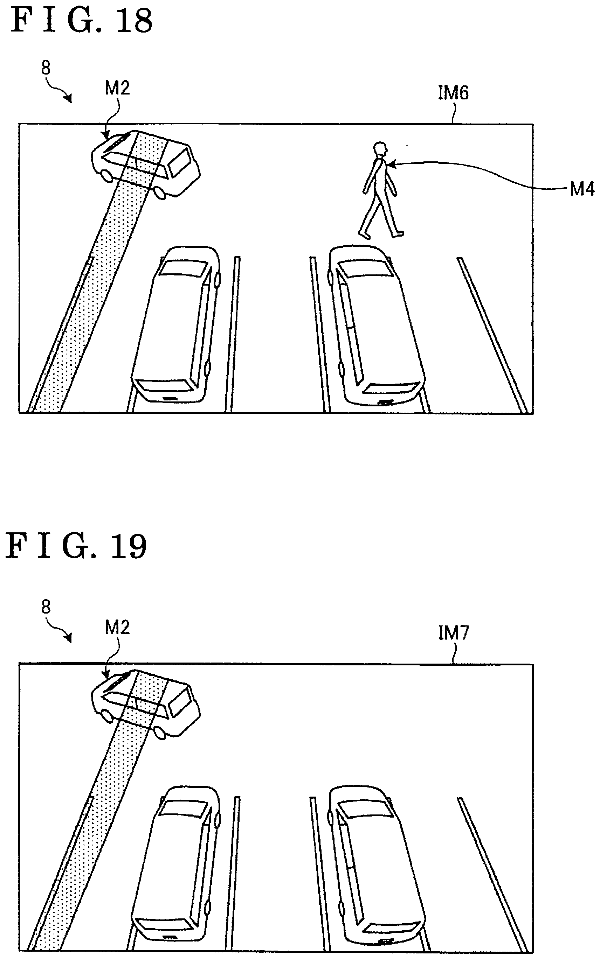

Figs. 18 and 19 show an example of the change occurred to the park assist image viewed from the higher perspective view point in a case where the object requiring attention which was recognized when the parking operation started becomes not to be recognized in mid-course of the parking. In this example, because a person who has already been recognized as the object requiring attention comes not to be recognized, an image IM6 (refer to Fig. 18) of the start of the parking which includes a mark 4 indicating the recognized person is switched or changed to an image IM7 (refer to Fig. 19) which does not include the mark M4.

Figs. 20 and 21 show an example of change occurred to the park assist image viewed in the field of view at the rear side of the vehicle in a case where an object requiring attention which was not recognized when the parking operation started is newly recognized in mid-course of the parking. In this example, because a person serving as the object requiring attention is newly recognized, an image IM8 (refer to Fig. 20) at the time of start of the parking is switched to an image IM9 (refer to Fig. 21) which includes a mark M5 indicating the person that has been newly recognized.

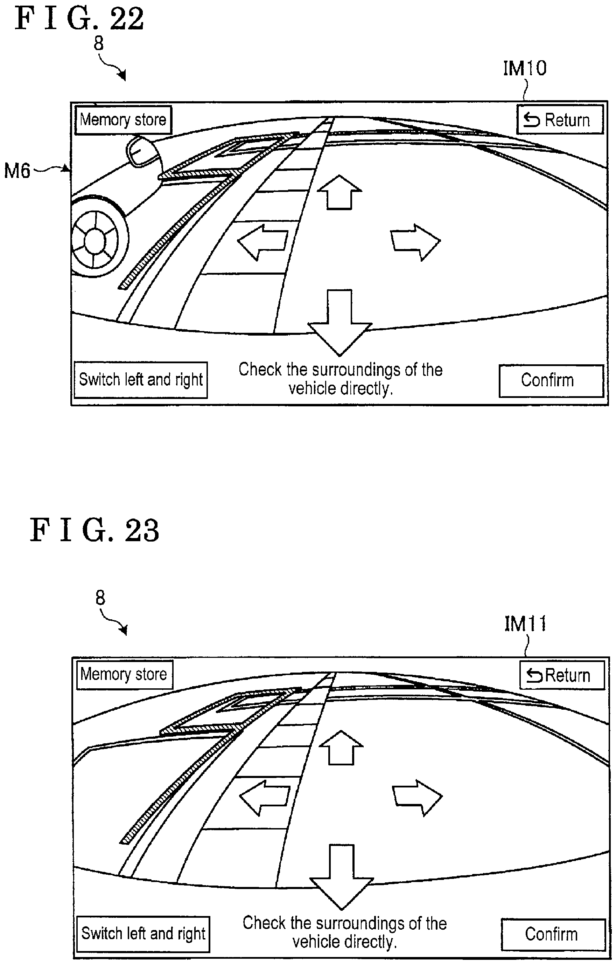

Figs. 22 and 23 show an example of change of the park assist image viewed in the field of view at the rear side of the vehicle in a case where an object requiring attention which has already been recognized when the parking started comes not to be recognized in mid-course of the parking. In this example, because another vehicle which has already been recognized as the object requiring attention comes to not be recognized in the mid-course of the parking, an image IM10 (refer to Fig. 22) at the time of starting the parking which includes a mark M6 indicating the recognized another vehicle is switched to an image IM11 (refer to Fig. 23) which does not include the mark M6.

In a case where the park assist image is switched in association with the change of the recognized circumstances as described above, there is a need that the driver 302 is notified of the change of the recognized circumstances and that the driver 302 is made to recognize presence or absence of the object requiring attention. Thus, similarly to a case where the recognized circumstances change during the execution of the follow-up running control, the first notice and/or the second notice are outputted also in a case where the recognized circumstances change during the execution of the park assist control. At the execution of the park assist control, the condition for stopping the output of the first notice and/or the second notice may be set to include that the line of sight of the driver 302 is directed to the object requiring attention, in addition to that it is detected that the line of sight of the driver 302 has visually recognized the display apparatus 8 (the images IM4 to IM11, which are described above). For example, in the example of Fig. 17, the condition may be set such that the output of the first notice and/or the second notice is stopped in a case where it is detected that the line of sight of the driver 302 is directed in a direction in which another vehicle indicated with the mark M3 is thought to be positioned (that is, a right rear direction relative to the vehicle 1). In a similar manner, in the example of Fig. 21, the condition may be set such that the output of, for example, the first notice and/or the second notice is stopped in a case where it is detected that the line of sight of the driver 302 is directed in a direction in which the person indicated with the mark M5 is thought to be positioned (that is, a left rear direction relative to the vehicle 1). By setting the condition in the above-mentioned manner, the driver 302 can be made to recognize presence or absence of the object requiring attention more reliably.

The embodiments and variation of the present invention are described above, however, the above-described embodiments and variation are only examples and are not intended to limit the scope of the invention. The above-described embodiments and variation can be implemented in various manners, and various omission, replacements and/or changes can be made without departing from the scope of the invention. The above-described embodiments and variation are included in the scope and/or subject matter of the invention, and are included in the invention described in the scope of claims and a range of equivalents thereof.

### EXPLANATION OF REFERENCE NUMERALS

- 1: vehicle
- 9: audio output apparatus (notifying portion)
- 14,214, 314, 414, 514: ECU (drive assist apparatus)
- 25c: display apparatus
- 401: recognition processing portion
- 402: drive assistance processing portion
- 403: display processing portion
- 404: detection processing portion
- 405, 2405, 3405, 4405, 5405: output processing portion

## Claims

1. A drive assist apparatus comprising:
a recognition processing portion recognizing circumstances of surroundings of a vehicle;
a drive assistance processing portion performing a drive assist control in accordance with the circumstances of the surroundings of the vehicle which are recognized by the recognition processing portion;
a display processing portion displaying a change of the circumstances of the surroundings of the vehicle on a display portion in a case where the circumstances of the surroundings of the vehicle change;
a detection processing portion detecting information related to a line of sight of a driver of the vehicle; and
in a case where the circumstances of the surroundings of the vehicle change,
an output processing portion outputting a first notice notifying the driver that the circumstances of the surroundings of the vehicle have changed by using another notifying portion which is separate from the display portion, and the output processing portion outputting a second notice notifying again the driver that the circumstances of the surroundings of the vehicle have changed by using the notifying portion after the first notice is outputted if it is not detected that the line of sight of the driver is directed to the display portion on the basis of a detection result by the detection processing portion.

2. The drive assist apparatus according to claim 1, wherein the output processing portion outputs the second notice repeatedly until it is detected that the line of sight of the driver is directed to the display portion.

3. The drive assist apparatus according to claim 2, wherein the output processing portion outputs the second notice in an output manner which is different from an output manner of the first notice; and
in a case where the output processing portion outputs the second notice twice or more, the output processing portion outputs the second notice which is outputted second time or after in an output manner that is different from an output manner of the second notice which was outputted in the past.

4. The drive assist apparatus according to either claim 2 or 3, wherein in a case where the output processing portion outputs the second notice twice or more, after the second notice is outputted for the first time, the output processing portion outputs the second notice repeatedly until the second notice is outputted for a predetermined number of times.

5. The drive assist apparatus according to either claim 2 or 3, wherein in a case where the output processing portion outputs the second notice twice or more, after the second notice is outputted for the first time, the output processing portion outputs the second notice repeatedly until it is detected by the detection processing portion that the line of sight of the driver is directed to the display portion and it is detected by the detection processing portion that the driver performs a predetermined active action of an eye.

6. The drive assist apparatus according to any one of claims 1 to 5, wherein
the notifying portion includes a sound output portion configured to output sound, and
the output processing portion outputs the first notice and the second notice with the sound, by using the sound output portion.

7. A drive assist apparatus comprising:
a recognition processing portion recognizing circumstances of surroundings of a vehicle;
a drive assistance processing portion performing a drive assist control in accordance with the circumstances of the surroundings of the vehicle which are recognized by the recognition processing portion;
a detection processing portion detecting information related to a line of sight of a driver of the vehicle;
in a case where the circumstances of the surroundings of the vehicle change,
an output processing portion outputting a first notice notifying the driver that the circumstances of the surroundings of the vehicle have changed if it is detected that a driving posture including a direction of the line of sight of the driver satisfies a predetermined condition on the basis of a detection result by the detection processing portion, and the output processing portion outputting a first warning which warns the driver that the driving posture does not satisfy the predetermined condition if it is detected that the driving posture does not satisfy the predetermined condition on the basis of the detection result by the detection processing portion.

8. The drive assist apparatus according to claim 7, wherein
that the driving posture satisfies the predetermined condition corresponds to that the direction of the line of sight of the driver is detected normally and the direction of the line of sight of the driver is directed to within a range of a predetermined angle relative to a travelling direction of the vehicle.

9. The drive assist apparatus according to either claim 7 or 8, wherein if a state in which it is detected that the driving posture does not satisfy the predetermined condition continues even after the output processing portion outputted the first warning, the output processing portion repeatedly outputs a second warning which warns again the driver that the driving posture does not satisfy the predetermined condition until it is detected that the driving posture satisfies the predetermined condition.

10. The drive assist apparatus according to any one of claims 7 to 9, further comprising:
a display processing portion displaying a change of the circumstances of the surroundings of the vehicle on a display portion in a case where the circumstances of the surroundings of the vehicle change;
after the first notice is outputted, if it is not detected that the line of sight of the driver is directed to the display portion by the detection processing portion, the output processing portion repeatedly outputting a second notice which notifies again the driver that the circumstances of the surroundings of the vehicle have changed until it is detected by the detection processing portion that the line of sight of the drive is directed to the display portion.

11. The drive assist apparatus according to any one of claims 7 to 10, wherein the output processing portion outputs the first notice or the first warning with sound, by using a sound output portion configured to output the sound.

## Amended claims

### Amended claims under Art. 19.1 PCT

**1.** (Amended) A drive assist apparatus comprising:
a recognition processing portion recognizing circumstances of surroundings of a vehicle;
a drive assistance processing portion performing a drive assist control in accordance with the circumstances of the surroundings of the vehicle which are recognized by the recognition processing portion;
a display processing portion displaying a change of the circumstances of the surroundings of the vehicle on a display portion in a case where the circumstances of the surroundings of the vehicle change;
a detection processing portion detecting information related to a line of sight of a driver of the vehicle;
in a case where the circumstances of the surroundings of the vehicle change,
an output processing portion outputting a first notice notifying the driver that the circumstances of the surroundings of the vehicle have changed by using another notifying portion which is separate from the display portion, and the output processing portion outputting a second notice notifying again the driver that the circumstances of the surroundings of the vehicle have changed by using the notifying portion after the first notice is outputted if it is not detected that the line of sight of the driver is directed to the display portion on the basis of a detection result by the detection processing portion;
the output processing portion outputting the second notice repeatedly until it is detected that the line of sight of the driver is directed to the display portion;
the output processing portion outputting the second notice in an output manner which is different from an output manner of the first notice; and
in a case where the output processing portion outputs the second notice twice or more, the output processing portion outputting the second notice which is outputted second time or after in an output manner that is different from an output manner of the second notice which was outputted in the past.

**2.** (Canceled)

**3.** (Canceled)

**4.** (Amended) The drive assist apparatus according to claim 1, wherein in a case where the output processing portion outputs the second notice twice or more, after the second notice is outputted for the first time, the output processing portion outputs the second notice repeatedly until the second notice is outputted for a predetermined number of times.

**5.** (Amended) The drive assist apparatus according to claim 1, wherein in a case where the output processing portion outputs the second notice twice or more, after the second notice is outputted for the first time, the output processing portion outputs the second notice repeatedly until it is detected by the detection processing portion that the line of sight of the driver is directed to the display portion and it is detected by the detection processing portion that the driver performs a predetermined active action of an eye.

**6.** (Amended) The drive assist apparatus according to any one of claims 1, 4 and 5, wherein
the notifying portion includes a sound output portion configured to output sound,and
the output processing portion outputs the first notice and the second notice with the sound, by using the sound output portion.

**7.** A drive assist apparatus comprising:
a recognition processing portion recognizing circumstances of surroundings of a vehicle;
a drive assistance processing portion performing a drive assist control in accordance with the circumstances of the surroundings of the vehicle which are recognized by the recognition processing portion;
a detection processing portion detecting information related to a line of sight of a driver of the vehicle;
in a case where the circumstances of the surroundings of the vehicle change,
an output processing portion outputting a first notice notifying the driver that the circumstances of the surroundings of the vehicle have changed if it is detected that a driving posture including a direction of the line of sight of the driver satisfies a predetermined condition on the basis of a detection result by the detection processing portion, and the output processing portion outputting a first warning which warns the driver that the driving posture does not satisfy the predetermined condition if it is detected that the driving posture does not satisfy the predetermined condition on the basis of the detection result by the detection processing portion.

**8.** The drive assist apparatus according to claim 7, wherein
that the driving posture satisfies the predetermined condition corresponds to that the direction of the line of sight of the driver is detected normally and the direction of the line of sight of the driver is directed to within a range of a predetermined angle relative to a travelling direction of the vehicle.

**9.** The drive assist apparatus according to either claim 7 or 8, wherein if a state in which it is detected that the driving posture does not satisfy the predetermined condition continues even after the output processing portion outputted the first warning, the output processing portion repeatedly outputs a second warning which warns again the driver that the driving posture does not satisfy the predetermined condition until it is detected that the driving posture satisfies the predetermined condition.

**10.** The drive assist apparatus according to any one of claims 7 to 9, further comprising:
a display processing portion displaying a change of the circumstances of the surroundings of the vehicle on a display portion in a case where the circumstances of the surroundings of the vehicle change;
after the first notice is outputted, if it is not detected that the line of sight of the driver is directed to the display portion by the detection processing portion, the output processing portion repeatedly outputting a second notice which notifies again the driver that the circumstances of the surroundings of the vehicle have changed until it is detected by the detection processing portion that the line of sight of the driver is directed to the display portion.

**11.** The drive assist apparatus according to any one of claims 7 to 10, wherein the output processing portion outputs the first notice or the first warning with sound, by using a sound output portion configured to output the sound.

Statement under Art. 19.1 PCT
Claim 1 is amended so as to include Claims 2 and 3 which are originally filed.

Claims 2and 3 are cancelled.

The claims on which Claims 4 and 5 depend are changed to Claim 1.

The claims on which Claim 6 depends are changed to any one of Claims 1, 4 and 5.
